# EUROPÄISCHE PATENTSCHRIFT

(11) **EP 0 467 153 B1**
(45) Veröffentlichungstag und Bekanntmachung des Hinweises auf die Patenterteilung: **29.12.1993**
(21) Anmeldenummer: 91111062.5
(22) Anmeldetag: 04.07.1991
(51) Int. Cl.: C08G 18/79, C08G 18/65, C08G 18/32, C08G 18/36, C09D 175/04

(54) **Bindemittelkombination, ihre Verwendung in Einbrennlacken und ein Verfahren zur Herstellung von Überzügen**
Combination of binders, their use in stove enamels and process for the preparation of coatings
Combinaison de liants, leur utilisation dans des vernis au four et procédé de préparation de revêtements

(30) Priorität: 17.07.1990 DE 4022660
(43) Veröffentlichungstag der Anmeldung: 22.01.1992
(73) Patentinhaber: BAYER AG, 51368 Leverkusen (DE)
(72) Erfinder: Pedain, Josef, Dr., W-5000 Koeln 80 (DE); Schrader, Friedrich, Dipl.-Ing., W-5653 Leichlingen (DE); Mager, Dieter, W-5090 Leverkusen (DE); Burgdörfer, Hans Heribert, Dr., W-5000 Köln 80 (DE)

(56) Entgegenhaltungen:
- EP-A- 0 166 173
- FR-A- 2 186 514

## Beschreibung

Die Erfindung betrifft eine neue Bindemittelkombination, die sich als oder zur Herstellung von lösungsmittelfreien oder -armen Einkomponenten-Polyurethan-Einbrennlacke(n) eignet, ihre Verwendung für diesen Zweck und ein Verfahren zur Herstellung von Beschichtungen auf beliebigen hitzeresistenten Substraten unter Verwendung von Beschichtungsmitteln, die als Bindemittel eine derartige Bindemittelkombination enthalten.

Die Verwendung von blockierten Isocyanaten zur Herstellung von thermisch härtbaren Polyurethan-Beschichtungen ist bekannt (vgl. z.B. Kunststoff-Handbuch, Band VII, Polyurethane, Carl Hanser Verlag München, 1966, Seiten 11-13 und 21 ff). Es sind eine Reihe von Verbindungen beschrieben, die sich zur reversiblen Blockierung von Isocyanaten eignen. Unter diesen kommt der Klasse der C-H-aciden Verbindungen (Beispiele: Malonsäure- und Acetessigsäureester) aufgrund günstiger chemischer und physiologischer Eigenschaften eine besondere Bedeutung zu (vgl. z.B. DE-OSen 2 342 603, 2 436 872, 2 550 156, 2 612 783, 2 612 784 und 2 612 785). In DE-OS 2 550 156 sowie DE-AS 2 623 081 und DE-AS 2 639 491 werden Polyurethan-Einbrennlacke auf Basis von mit Malonsäureestern oder Acetessigsäureestern blockierten aliphatischen Polyisocyanaten und organischen Polyhydroxylverbindungen beschrieben.

Die Polyurethan-Einbrennlacke der genannten Veröffentlichungen sind jedoch zur Herstellung von Beschichtungen einer sehr hohen Stoß- und Schlagfestigkeit wenig geeignet. Es besteht jedoch ein zunehmender Bedarf an Beschichtungsmitteln, die die Herstellung von stoß- und schlagfesten Beschichtungen zum Schutz der Oberflächen von Industriegütern wie z.B. Maschinenteilen, Fahrzeugkarosserien oder Transportbehältern gestatten.

Ein wesentlicher Fortschritt kann in dem System der EP-A-0 053 766 gesehen werden, die zur Herstellung von steinschlagfesten Füllern geeignet sind.

Allen bislang bekanntgewordenen Einkomponenten-Systemen auf Basis von blockierten Polyisocyanaten und organischen Polyhydroxylverbindungen des Standes der Technik haftet jedoch der Nachteil an, daß sie entweder bei der Verarbeitung mindestens 40 Gew.-% Lösungsmittel enthalten müssen oder aber auf aromatischen Polyisocyanaten basieren, die bei thermischer Belastung der Beschichtungen vergilben.

Neben den genannten Einkomponenten-Polyurethansystemen sind auch Kombinationen von blockierten Polyisocyanaten mit organischen Diaminen bekannt geworden (DE-AS 2 131 299). Diese Systeme gewährleisten zwar einen hochelastischen Oberflächenschutz, haben jedoch den Nachteil, daß sie nur eine begrenzte Verarbeitungszeit von maximal einigen Tagen haben, d.h. sie sind nur "Quasi-Einkomponentenharze", und daß beim Einbrennvorgang niedermolekulare Amine entweichen können, was zu Geruchsbelästigungen führen und darüber hinaus toxikologisch bedenklich sein kann.

Es war daher die der Erfindung zugrundeliegende Aufgabe, eine neue Bindemittelkombination zur Verfügung zu stellen, die sich als oder zur Herstellung von Füller(n), Zwischengrundierung(en) oder für den dickschichtigen Steinschlagschutz bei der Automobillackierung eignen und nicht mit den Nachteilen der Systeme des Standes der Technik behaftet ist. Die neue Bindemittelkombination sollte die Herstellung von stoß- und schlagfesten hochelastischen Beschichtungen gestatten, wie sie zum Schutz von Fahrzeugkarosserien, Maschinenteilen, Transportbehältern oder anderen Industriegütern erforderlich sind. Gleichzeitig sollte die Bindemittelkombination toxikologisch weitgehend unbedenklich sein und die Herstellung von Beschichtungsmitteln gestatten, die sich bei einem Festkörpergehalt von mehr als 60, vorzugsweise mehr als 70 Gew.-% problemlos verarbeiten lassen. Da im übrigen insbesondere bei der Überlackierung mit einem Klarlack Bindemittel für Füller und Zwischengrundierung nicht vergilben dürfen, sollten auch die u.a hierfür vorgesehenen erfindungsgemäßen Bindemittelkombinationen die Herstellung von unter thermischer Belastung vergilbungsresistenten Beschichtungen gestatten.

Diese Aufgabe konnte mit der Bereitstellung der nachstehend näher beschriebenen erfindungsgemäßen Bindemittelkombination gelöst werden.

Gegenstand der Erfindung ist eine Bindemittelkombination bestehend aus
a) 20 bis 70 Gew.-% einer Polyisocyanatkomponente, bestehend im wesentlichen aus mindestens einem organischen Polyisocyanat mit zumindest teilweise blockierten Isocyanatgruppen und
b) 80 bis 30 Gew.-% einer Polyolkomponente,

dadurch gekennzeichnet, daß
a) die Polyisocyanatkomponente aus Oligomerisierungsprodukten des 1,6-Diisocyanatohexans mit zumindest teilweise mit Blockierungsmitteln für Isocyanatgruppen blockierten Isocyanatgruppen und einem Gehalt an blockierten Uretdiondiisocyanat der Formel (I) 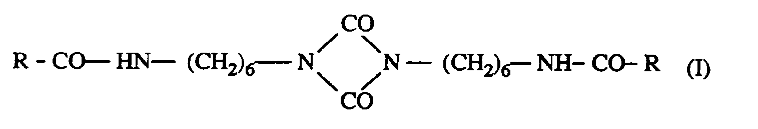 von mindestens 50 Gew.-% besteht, wobei R für den durch Entfernung des aktiven Wasserstoffatoms aus einem monofunktionellen Blockierungsmittel entstehenden Rest steht, und
b) die Polyolkomponente aus einem Gemisch aus
   b1) 100 Gew.-Teilen eines Alkoxylierungsprodukts von Bisphenol A der Formel (II) 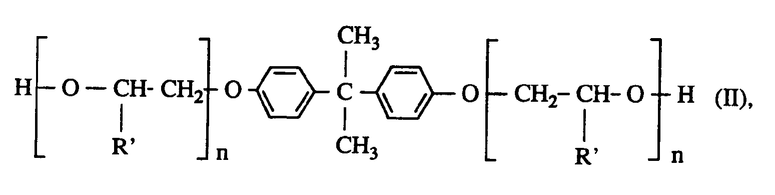 in welcher
      - R': für Wasserstoff oder eine Methylgruppe und
      - n: im statistischen Mittel eine ganze oder gebrochene Zahl von 1 bis 2 bedeutet,
   b2) 20 bis 200 Gew.-Teilen Rizinusöl und
   b3) 0 bis 40 Gew.-Teilen an anderen organischen Polyhydroxylverbindungen

besteht.

Gegenstand der Erfindung ist auch die Verwendung dieser Bindemittelkombination als oder zur Herstellung von Einkomponenten-Polyurethan-Einbrennlacken.

Gegenstand der Erfindung ist schließlich auch ein Verfahren zur Herstellung von Überzügen durch Beschichtung beliebiger hitzeresistenter Substrate mit einem unter dem Einfluß von Hitze aushärtbaren Beschichtungsmittel, welches als Bindemittel Kombinationen von blockierten Polyisocyanaten mit organischen Polyhydroxylverbindungen enthält, und anschließende Aushärtung der Beschichtung bei 90 bis 220°C, dadurch gekennzeichnet, daß als Beschichtungsmittel solche verwendet werden, die als Bindemittel eine Bindemittelkombination der oben genannten Art enthalten.

Bei der Komponente a) der erfindungsgemäßen Bindemittelkombination handelt es sich um Uretdiongruppen aufweisende Oligomerisierungsprodukte von 1,6-Diisocyanatohexan, deren Isocyanatgruppen zumindest teilweise in mit Blockierungsmittel für Isocyanatgruppen blockiert sind. Im allgemeinen weist die Komponente a) 0 bis 5, vorzugsweise 0 bis 2,5 Gew.-% an freien Isocyanatgruppen auf. In Abhängigkeit vom Molekulargewicht des Blockierungsmittels liegt ihr Gehalt an blockierten Isocyanatgruppen (berechnet als NCO, Molekulargewicht = 42) bei 10 bis 18, vorzugsweise 13 bis 16 Gew.-%. Der Gehalt an Uretdiongruppen (berechnet als N₂C₂O₂, Molekulargewicht = 84) liegt bei 6 bis 14, vorzugsweise 8 bis 12 Gew.-%.

Bei den Oligomerisierungsprodukten von 1,6-Diisocyanatohexan handelt es sich um gegebenenfalls Urethan- und/oder Isocyanuratgruppen aufweisende Polyisocyanatgemische, die zumindest zu 50 % aus dem Uretdiondiisocyanat (III) 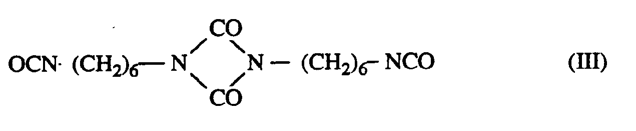
bestehen. Die eventuelle Anwesenheit von Isocyanuratgruppen in dem Polyisocyanatgemisch ist darauf zurückzuführen, daß viele der zur Dimerisierung von Diisocyanaten eingesetzten Katalysatoren gleichzeitig die Trimerisierung von Isocyanatgruppen beschleunigen. Die eventuelle Anwesenheit von Urethangruppen ist auf die oftmals erfolgende Mitverwendung von alkoholischen Cokatalysatoren zurückzuführen.

Die Oligomerisierung von 1,6-Diisocyanatohexan kann nach an sich bekannten Verfahren erfolgen, wie sie beispielsweise in DE-OS 1 670 720, DE-OS 3 437 635, DE-OS 3 432 081, DE-OS 3 809 261 oder der deutschen Patentanmeldung P 39 000 53.2 beschrieben sind.

Die Oligomerisierungsprodukte weisen im allgemeinen vor der Blockierung einen NCO-Gehalt von 15 bis 23 Gew.-% auf. Diese Isocyanatgruppen werden, wie bereits ausgeführt, zumindest zum Teil durch eine an sich bekannte Blockierungsreaktion blockiert. Als Blockierungsmittel werden die bekannten monofunktionellen Blockierungsmittel eingesetzt, wie z.B. Caprolactam, Malonsäurediethylester, Acetessigsäureethylester oder Oxime wie Butanonoxim. Butanonoxim ist das bevorzugte Blockierungsmittel.

Im Anschluß an die Blockierungsreaktion liegen zumindest teilblockierte, Uretdiongruppen aufweisende Polyisocyanate vor, die im allgemeinen zumindest zu 50 % aus Verbindungen der bereits oben angegebenen allgemeinen Formel (I) bestehen.

Die Polyolkomponente b) besteht aus einem Gemisch aus 100 Gew.-Teilen der Komponente b1), 20 bis 200, vorzugsweise 35 bis 100 Gew.-Teilen der Komponente b2) und 0 bis 40, vorzugsweise 10 bis 20 Gew.-Teilen der Komponente b3).

Bei der Komponente b1) handelt es sich um Alkoxylierungsprodukte von Bisphenol A, wobei als Alkoxylierungsmittel Ethylenoxid und/oder Propylenoxid in einer Menge von 2 bis 4 Mol pro Mol Bisphenol A zum Einsatz gelangen. Diese Alkoxylierungsprodukte entsprechen der bereits obengenannten allgemeinen Formel (II). Die Hydroxylzahl dieser Alkoxylierungsprodukte liegt bei 243 bis 354, vorzugsweise bei 300 bis 340. Besonders bevorzugt werden die entsprechenden Propoxylierungsprodukte des Bisphenol A eingesetzt.

Bei der Komponente b2) handelt es sich um Ricinusöl. Es können die handelsüblichen Sorten verwendet werden. Gut geeignet ist beispielsweise ein Ricinusöl der Hydroxylzahl 165.

Bei der gegebenenfalls mitzuverwendenden Komponente b3) handelt es sich um höhermolekulare Polyhydroxylverbindungen der aus der Polyurethanchemie an sich bekannten Art. In Betracht kommen Polyhydroxypolyester, Polyhydroxypolyether oder Hydroxylgruppen aufweisende Polymerisate, d.h. die an sich bekannten Polyhydroxypolyacrylate. Diese Verbindungen weisen im allgemeinen eine Hydroxylzahl von 50 bis 200, vorzugsweise 80 bis 130 auf. Bevorzugt werden an sich bekannte Polyhydroxypolyester der genannten Art als gegebenenfalls mitzuverwendende Komponente b3) eingesetzt.

Bei den Polyhydroxypolyacrylaten handelt es sich um an sich bekannte Mischpolymerisate von Styrol mit einfachen Estern der Acrylsäure und/oder Methacrylsäure, wobei zwecks Einführung der Hydroxylgruppen Hydroxyalkylester, wie beispielsweise die 2-Hydroxyethyl-, 2-Hydroxypropyl-, 2-, 3- oder 4-Hydroxybutylester dieser Säuren mitverwendet werden.

Geeignete Polyetherpolyole sind die aus der Polyurethanchemie an sich bekannten Ethoxylierungs- und/oder Propoxylierungsprodukte geeigneter 2- bis 4-wertiger Startermoleküle wie z.B. Wasser, Ethylenglykol, Propandiol, Trimethylolpropan, Glycerin und/oder Pentaerythrit.

Beispiele geeigneter Polyesterpolyole sind insbesondere die in der Polyurethanchemie an sich bekannten Umsetzungsprodukte von mehrwertigen Alkoholen, beispielsweise von Alkanpolyolen der soeben beispielhaft genannten Art mit unterschüssigen Mengen Polycarbonsäuren bzw. Polycarbonsäureanhydriden, insbesondere Dicarbonsäuren bzw. Dicarbonsäureanhydriden. Geeignete Polycarbonsäuren bzw. Polycarbonsäureanhydride sind beispielsweise Adipinsäure, Phthalsäure, Isophthalsäure, Phthalsäureanhydrid, Tetrahydrophthalsäureanhydrid, Hexahydrophthalsäureanhydrid, Maleinsäure, Maleinsäureanhydrid, deren Diels-Alder-Addukte mit Cyclopentadien, Fumarsäure oder dimere bzw. trimere Fettsäuren. Bei der Herstellung der Polyesterpolyole können selbstverständlich beliebige Gemische der beispielhaft genannten mehrwertigen Alkohole oder beliebige Gemische der beispielhaft genannten Säuren bzw. Säureanhydride eingesetzt werden.

Die Herstellung der Polyesterpolyole erfolgt nach bekannten Methoden, wie sie z.B. in Houben-Weyl, Methoden der Organischen Chemie, Band XIV/2, G. Thieme-Verlag, Stuttgart, 1963, Seiten 1 - 47 beschrieben sind.

Die bevorzugten erfindungsgemäßen Bindemittelkombinationen bestehen im wesentlichen aus 40 bis 60 Gew.-% einer Polyisocyanatkomponente a) der beispielhaft genannten Art und 60 bis 40 Gew.-% einer Polyolkomponente b) der beispielhaft genannten Art. Im allgemeinen werden Art und Mengenverhältnisse der Einzelkomponenten im Rahmen der gemachten Offenbarung so ausgewählt, daß in den erfindungsgemäßen Bindemittelkombinationen das Äquivalentverhältnis von freien und mit Blockierungsmittels blockierten Isocyanatgruppen der Komponente a) zu Hydroxylgruppen der Komponente b) bei maximal 1:1, vorzugsweise bei 0,8:1 bis 1:1 liegt.

Die erfindungsgemäßen Bindemittelkombinationen können als solche oder in Kombination mit den an sich üblichen Hilfs- und Zusatzmitteln der Lacktechnologie der erfindungsgemäßen Verwendung zugeführt werden.

Die Beschichtungsmittel auf Basis der erfindungsgemäßen Kombinationen weisen vorzugsweise Feststoffgehalte von über 60, vorzugsweise von über 70 Gew.-% auf. Als Lösungsmittel kommen gegebenenfalls die aus der Lacktechnologie üblichen in Betracht. Beispiele sind Ethylacetat, Methylglykolacetat, Ethylglykolacetat, Diethylenglykolmonomethyletheracetat, Methylethylketon, Methylisobutylketon, Toluol, Xylol, sowie beliebige Gemische derartiger Lösungsmittel.

Neben der erfindungswesentlichen Bindemittelkombination und den erwähnten Lösemitteln und Weichmachern können die erfindungsgemäßen Beschichtungsmittel auch, wie bereits angedeutet, alle beliebigen, in der Lacktechnologie an sich bekannten Hilfs- und Zusatzmittel, wie Pigmente, Füllstoffe, Verlaufshilfsmittel oder die Vernetzungsreaktion beschleunigende Katalysatoren enthalten. Als Katalysator kommt besonders Dibutylzinndilaurat in Frage.

Die erfindungsgemäßen Beschichtungsmittel stellen bei Raumtemperatur flüssige und lagerstabile Gemische dar.

Zur Durchführung des erfindungsgemäßen Verfahrens zur Herstellung von Überzügen unter Verwendung der erfindungsgemäßen Beschichtungsmittel werden diese nach an sich bekannten Methoden, beispielsweise durch Spritzen, Streichen, Tauchen, Fluten oder mit Hilfe von Walzen oder Rakeln auf beliebige hitzeresistente Substrate ein- oder mehrschichtig aufgetragen. Das erfindungsgemäße Verfahren eignet sich zur Herstellung von Überzügen auf Metallen, Kunststoffen, Holz oder Glas. Besonders gut geeignet ist das erfindungsgemäße Verfahren zur Herstellung von Überzügen auf Stahlblechen, wie sie beispielsweise bei der Herstellung von Fahrzeugkarosserien, Maschinen, Verkleidungsblechen, Fässern oder Containern Verwendung finden. Die beim erfindungsgemäßen Verfahren zu beschichtenden Substrate können vor der Durchführung des erfindungsgemäßen Verfahrens mit geeigneten Grundierungen versehen sein. Bei der Durchführung des erfindungsgemäßen Verfahrens wird die Menge der eingesetzten erfindungsgemäßen Beschichtungsmittel im allgemeinen so bemessen, daß Trockenschichtdicken von ca. 0,02 bis 0,3 mm vorliegen. Es ist jedoch auch möglich, wesentlich dickere Schichtdicken herzustellen.

Nach der Beschichtung der beispielhaft genannten Substrate werden bei der Durchführung des erfindungsgemäßen Verfahrens die aufgetragenen erfindungsgemäßen Beschichtungsmittel durch Erhitzen auf 90 bis 220°C, vorzugsweise auf 130 bis 180°C ausgehärtet.

Die ausgehärteten Überzüge lassen sich, wenn aus optischen Gründen gefordert, problemlos mit Decklacken versehen. Dabei kommt den erfindungsgemäßen Beschichtungsmitteln ihre Anwendbarkeit in vergleichsweise dünnen Schichten zugute. Im Gegensatz zu den dickschichtig anzuwendenden schlagfesten Beschichtungen des Standes der Technik zeigen sie keine Probleme in Bezug auf Verlauf und Oberflächenstruktur und können daher hochglänzend überlackiert werden. Diese Eigenschaft und die hohe Vergilbungsbeständigkeit ermöglichen die Anwendung der erfindungsgemäßen Beschichtungsmittel in Bereichen, wo ein elastischer Oberflächenschutz bisher aus ästhetischen Gründen nicht angebracht werden konnte, so zum Beispiel an den gut sichtbaren Teilen von Fahrzeugkarosserien, die durch Steinschlag starken mechanischen Beanspruchungen ausgesetzt sind.

Der mit dem erfindungsgemäßen Verfahren erreichbare Oberflächenschutz wird in den nachfolgenden Beispielen demonstriert. Hervorzuheben ist, daß die Schlagfestigkeit der Beschichtungen aus einem Zusammenwirken von hoher Elastizität und guter Haftung auf den zu schützenden Substraten resultiert. Alle Prozentangaben beziehen sich auf Gewichtsprozente.

### Beispiel 1 (Herstellung und Beschreibung der Ausgangsstoffe)

### 1.1 Herstellung eines Oligomerisierungsprodukts von 1,6-Diisocyanatohexan

2000 g 1,6-Diisocyantohexan werden in einem geeigneten Reaktionsgefäß vorgelegt und auf 50°C erhitzt. Unter ständigem Rühren unter Stickstoffatmosphäre werden anschließend 20 g 2,2,4-Trimethylpentandiol-1,3 und dann 30 g Tri-n-butylphosphin eingetragen. Die exotherme Reaktion wird durch Kühlung auf 60°C gehalten. Nach einer Reaktionszeit von 6 h weist das Reaktionsgemisch einen NCO-Gehalt von 42,5 % auf. Die Reaktion wird jetzt durch Zugabe von 16,5 g Toluolsulfonsäuremethylester und 2-stündiges Nacherhitzen bei 80°C abgestoppt. Die so erhaltene Rohware wird dann mittels Fallrohrverdampfer (165°C/1 mbar) und Dünnschichtverdampfer (150°C/0,30 mbar) von überschüssigem Ausgangsdiisocyanat befreit.

Das resultierende Produkt weist folgende Daten auf:
- NCO-Gehalt (%): 21,6
- Viskosität (mPa.s/23°C): 200
- Hazen-Farbzahl: 50
- freies Ausgangsdiisocyanat (%): 0,2

Eine gelchromatographische Untersuchung zeigt, daß das so erhaltene Oligomerisierungsprodukt zu 72 % aus der Verbindung der Formel (III) und zum Rest aus Tris-(6-isocyanatohexyl)-isocyanurat, dessen höheren Homologen, urethanisierten Produkten und höhermolekularen Homologen des Uretdiondiisocyanats (III) besteht.

### 1.2 Polyolkomponente b1

Es wird ein Produkt der Firma Akzo Chemie eingesetzt, das unter dem Namen Dianol® 33 gehandelt wird und durch folgende Formel beschrieben wird:

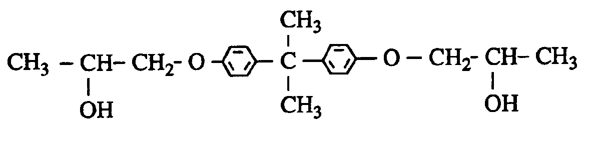

Die Substanz ist bei 75°C eine farblose Flüssigkeit mit einer Reinheit von mehr als 98 %.

### 1.3 Polyolkomponente b2

Es wird käufliches Ricinusöl mit einer Hydroxylzahl 165 eingesetzt. Ricinusöl ist ein Triglycerid pflanzlicher Fettsäuren, überwiegend (85 bis 90 %) der Ricinolsäure.

### 1.4 Polyolkomponente b3

In den folgenden Beispielen wird als Polyolkomponente b3 ein Polyester eingesetzt. Er besteht aus folgenden Rohstoffen:
50,4 Gew.-Teilen Neopentylglykol
16,8 Gew.-Teilen Adipinsäure
14,9 Gew.-Teilen Hexahyrophthalsäureanhydrid
16,0 Gew.-Teilen Maleinsäureanhydrid
0,01 Gew.-Teilen Toluhydrochinon-Lösung (50 %ig in Xylol)
10,7 Gew.-Teilen Dicyclopentadien.

Zur Herstellung benutzt man eine Kesselapparatur in geeigneter Größe, die mit einer Füllkörperkolonne und Ölheizung ausgerüstet ist.

Nach dem Spülen der Apparatur mit Stickstoff wird Neopentylglykol in die Apparatur gefüllt. Man leitet das einfache Volumen an Stickstoff durch den Rohstoff und heizt auf 125°C. Bei dieser Temperatur gibt man die restlichen Rohstoffe - mit Ausnahme des Dicyclopentadiens so zu, daß die Innentemperatur nicht unter 120°C abfällt. Man heizt danach weiter auf 190°C auf, wobei man die Heizleistung so regelt, daß die Kopftemperatur nicht über 105°C steigt (ca. 5 h). Danach bestimmt man die Säurezahl und verestert gegebenenfalls weiter, bis sie auf 70 bis 50 gesunken ist. Wenn die Säurezahl erreicht ist, kühlt man auf 150°C ab und gibt bei dieser Temperatur das Dicyclopentadien hinzu. Die Stickstoffzufuhr wird nun unterbrochen und die Apparatur abgedichtet. Es wird noch 5 h auf 170°C erhitzt, wobei sich ein Druck von ca. 1 bar einstellt, der allmählich absinkt. Dann wird erneut Stickstoff durch die Harzschmelze geleitet und so auf 210°C geheizt, daß die Kopftemperatur 105°C nicht überschreitet. Man kondensiert weiter, bis die Auslaufzeit nach DIN 53 211 (70 %ig in Xylol, 23°C) 50 bis 60 s beträgt; die Säurezahl liegt dann bei ca. 10. Man erhält ein hellgelbes Harz mit einer Hydroxylzahl von 120.

### Beispiel 2 (Herstellung eines erfindungsgemäßen Einkomponenten-Polyurethaneinbrennsystems)

349 Teile der Isocyanatkomponente (aus Beispiel 1.1) werden bei 20 bis 25°C in einer geeigneten Rührapparatur vorgelegt und portionsweise mit insgesamt 153 Teilen Butanonoxim versetzt. Durch Kühlen wird dabei eine Temperatur von 60 bis 70°C eingehalten. Nach Zugabe der gesamten Butanonoximmenge und 15 min Nachrührzeit sind keine freien NCO-Gruppen mehr nachzuweisen. Nun fügt man bei ca. 50°C das Gemisch aus 272 Teilen Polyolkomponente b1 (Beispiel 1.2) 117 Teilen Polyolkomponente b2 (Beispiel 1.3) und 44 Teilen Polyolkomponente b3 (Beispiel 1.4) zu.

Man erhält nach gutem Vermischen eine lösemittelfreie, farblose, klare Schmelze eines Einkomponenten-Urethaneinbrennharzes. Der Gehalt an Uretdiongruppen in dem Einkomponentenharz beträgt ca. 6,7 %, der Gehalt an blockierten Isocyanatgruppen ca. 8 %. Das Äquivalentverhältnis von freien und mit Blockierungsmitteln blockierten Isocyanatgruppen zu Hydroxylgruppen liegt bei etwa 0,9:1.

### Beispiel 3 (Prüfung der Lagerstabilität des Einkomponentenurethaneinbrennharzes)

Zur Prüfung der Lagerstabilität wird das Einkomponentenharz aus Beispiel 2 durch Vermischen mit Isobutanol auf einen Feststoffgehalt von 95 % eingestellt. Man erhält eine viskose Flüssigkeit mit 11.000 mPas (23°C). Eine Probe der Substanz wird im verschlossenen Gefäß bei 50°C gelagert. Nach 30 Tagen hat das Produkt eine Viskosität von 12.500 mPas/23°C. Eine Probe, die 180 Tage bei Raumtemperatur gelagert wurde, hat keine Viskositätserhöhung. Damit ist gezeigt, daß das Produkt ausreichend lagerstabil ist, um als Einkomponentenbeschichtungsmittel eingesetzt zu werden.

### Beispiel 4 (Anwendung als Einkomponentenbindemittel)

413 g des Einkomponentenharz aus Beispiel 3 (95 %ige Lösung in Isobutanol) werden mit
235 g Bariumsulfat (als Füllstoff)
78 g Titandioxid-Pigment
0,8 g Ruß
4 g Eisenoxidpigment
und kleineren Mengen an Antiabsetzmittel, Dispergierhilfsmittel, Katalysator und Verlaufmittel versetzt und mit 219 g eines Lösungsmittelgemisches aus Methoxypropylacetat, Ethoxypropylacetat, Butylacetat und Solventnaphtha® (Alkylbenzolgemisch) im Verhältnis 4:1:1:4 in einem Dissolver angerieben. Man erhält ein Einkomponentenbeschichtungsmittel, das nach DIN 53 211 spritzfähig ist mit 30 sec in der 4 mm-Düse und einen Feststoffgehalt von ca. 75 % hat.

Mit dem Produkt werden phosphatierte, in üblicher Weise durch Elektrotauchlackierung grundierte Stahlbleche im Spritzverfahren beschichtet. Das Einkomponentenharz wird bei 150°C in 30 min ausgehärtet. Man erhält vernetzte Filme mit einer Schichtdicke von ca. 45 µm, die gegen Lösemittel beständig sind und eine hohe Oberflächenhärte haben.

Die entscheidende Prüfung der Lackfilme erfolgt mit dem Steinschlag-Prüfgerät nach VDA (Verband der Automobilindustrie) Modell 508 der Firma Erichsen GmbH & Co., D 5870 Hemer-Sundwig, Bundesrepublik Deutschland.

In diesem Gerät werden die Proben mit einem definierten, scharfkantigen Stahlschrot, der durch Druckluft beschleunigt wird, im Normalklima beschossen.

Der Schaden, den die Proben beim Beschuß erleiden, wird durch Vergleich mit Mustertafeln festgelegt. Man unterscheidet dabei 5 Schadenstufen von Kennwert
- 0 - 1: = keine Beschädigung
- 1: = sehr geringe Beschädigung
bis
- 5: = sehr starke Beschädigung.

Alle geprüften Proben mit dem Beschichtungsmittel auf Basis des erfindungsgemäßen Bindemittels liegen im Bereich 0 bis 1 oder 1. Das heißt, obwohl der Lack nur in einer verhältnismäßig dünnen Schicht aufgetragen wurde, wird er durch den Beschuß nicht oder nur sehr wenig geschädigt, was seine hohe Elastizität und gute Haftung beweist.

Die hohe Beständigkeit des erfindungsgemäß hergestellten Lackfilms im Beschußversuch demonstriert die gute Eignung der erfindungsgemäßen Bindemittelkombination zur Herstellung von Grundierungen und Füllern auch für gut sichtbare Teile von Fahrzeugkarosserien, die durch Steinschlag stark beansprucht werden, aber aus ästhetischen Gründen nur sehr schwierig dickschichtig lackiert werden können.

## Patentansprüche

1. Bindemittelkombination bestehend im wesentlichen aus
a) 20 bis 70 Gew.-% einer Polyisocyanatkomponente, bestehend aus mindestens einem organischen Polyisocyanat mit zumindest teilweise blockierten Isocyanatgruppen und
b) 80 bis 30 Gew.-% einer Polyolkomponente,
dadurch gekennzeichnet, daß
a) die Polyisocyanatkomponente aus Oligomerisierungsprodukten des 1,6-Diisocyanatohexans mit zumindest teilweise mit Blockierungsmitteln für Isocyanatgruppen blockierten Isocyanatgruppen und einem Gehalt an blockierten Uretdiondiisocyanat der Formel (I) 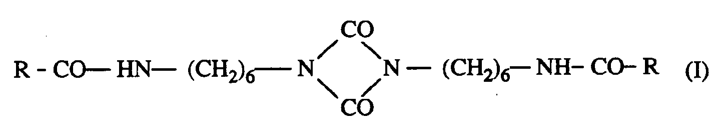 von mindestens 50 Gew.-% besteht, wobei R für den durch Entfernung des aktiven Wasserstoffatoms aus einem monofünktionellen Blockierungsmittel entstehenden Rest steht, und
b) die Polyolkomponente aus einem Gemisch aus
b1) 100 Gew.-Teilen eines Alkoxylierungsprodukts von Bisphenol A der Formel (II) 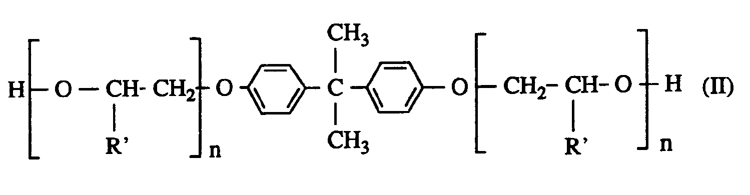 in welcher
R' für Wasserstoff oder eine Methylgruppe und
n im statistischen Mittel eine ganze oder gebrochene Zahl von 1 bis 2 bedeutet,
b2) 20 bis 200 Gew.-Teilen Rizinusöl und
b3) 0 bis 40 Gew.-Teilen an anderen organischen Polyhydroxylverbindungen
besteht.

2. Bindemittelkombination gemaß Anspruch 1, dadurch gekennzeichnet, daß die Isocyanatgruppen der Komponente a) zumindest teilweise in mit Butanonoxim blockierter Form vorliegen.

3. Bindemittelkombinationen gemaß Anspruch 1 und 2, dadurch gekennzeichnet, daß die gegebenenfalls mitverwendete Polyolkomponente b3) eine Hydroxylzahl von 50 bis 200 aufweist und im wesentlichen aus einem Polyhydroxypolyether, oder einem Polyhydroxypolyester oder einem Polyhydroxypolyacrylat oder einem Gemisch aus derartigen Polyhydroxylverbindungen besteht.

4. Verwendung der Bindemittelkombination gemäß Anspruch 1 bis 3 in Einkomponenten-Polyurethan-Einbrennlacken.

5. Verfahren zur Herstellung von Überzügen durch Beschichtung beliebiger hitzeresistenter Substrate mit einem unter dem Einfluß von Hitze aushärtbaren Beschichtungsmittel, welches als Bindemittel Kombinationen von blockierten Polyisocyanaten mit organischen Polyhydroxylverbindungen enthält, und anschließende Aushärtung der Beschichtung bei 90 bis 220°C, dadurch gekennzeichnet, daß als Beschichtungsmittel solche verwendet werden, die als Bindemittel Bindemittelkombinationen gemäß Anspruch 1 bis 3 enthalten.

## Claims

1. A binder combination consisting essentially of
a) 20 to 70% by weight of a polyisocyanate component consisting essentially of at least one organic polyisocyanate containing at least partly blocked isocyanate groups and
b) 80 to 30% by weight of a polyol component,
characterized in that
a) the polyisocyanate component consists of oligomerization products of 1,6-diisocyanatohexane with isocyanate groups at least partly blocked with blocking agents for isocyanate groups and having a content of blocked uretdione diisocyanate corresponding to formula (I) 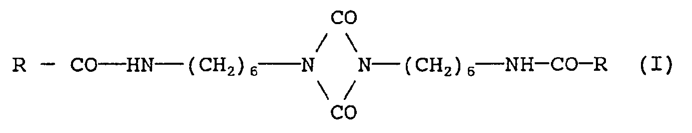 in which R represents the residue formed by removal of the active hydrogen atom from a monofunctional blocking agent, of at least 50% by weight and
b) the polyol component consists of a mixture of
b1) 100 parts by weight of an alkoxylation product of bisphenol A corresponding to formula (II) 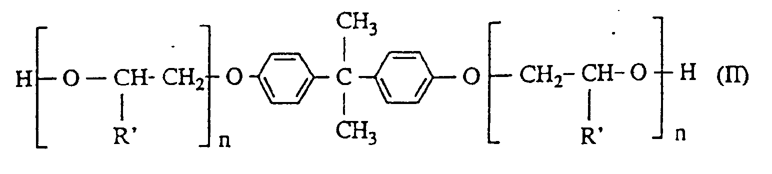 in which
R' is hydrogen or a methyl group and
n on a statistical average is a whole or broken number of 1 to 2,
b2) 20 to 200 parts by weight castor oil and
b3) 0 to 40 parts by weight other organic polyhydroxyl compounds.

2. A binder combination as claimed in claim 1, characterized in that the isocyanate groups of component a) are at least partly blocked with butanone oxime.

3. Binder combinations as claimed in claims 1 and 2, characterized in that the optional polyol component b3) has a high hydroxyl value of 50 to 200 and consists essentially of a polyhydroxypolyether or a polyhydroxypolyester or a polyhydroxypolyacrylate or a mixture of such polyhydroxyl compounds.

4. The use of the binder combinations claimed in claims 1 to 3 in one-component polyurethane stoving lacquers.

5. A process for the production of coatings by coating heat-resistant substrates with a heat-curing coating compound containing combinations of blocked polyisocyanates with organic polyhydroxyl compounds as binder and subsequent curing of the coating at 90 to 220°C, characterized in that coating compounds containing the binder combinations claimed in claims 1 to 3 as binder are used as the coating compounds.

## Revendications

1. Combinaison de liants comprenant principalement
a) 20 à 70 % en poids d'un composant polyisocyanate constitué d'au moins un polyisocynate organique portant des groupes isocyanato au moins partiellement protégés et
b) 80 à 30 % en poids d'un composant polyol,
caractérisée en ce que
a) le composant polyisocyanate est constitué de produits d'oligomérisation du 1,6-diisocyanatohexane portant des groupes isocyanato protégé au moins en partie avec des agents de protection pour de tels groupes et ayant une teneur en uretdionediisocyanate protégé de formule (I) 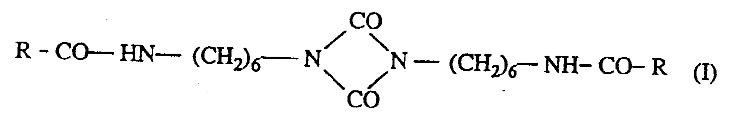 d'au moins 50 % en poids, R représentant le reste produit par élimination de l'atome actif d'hydrogène d'un agent protecteur monofonctionnel et
b) le composant polyol est constitué d'un mélange
b1) de 100 parties en poids d'un produit d'alkoxylation de bisphénol A de formule (II) 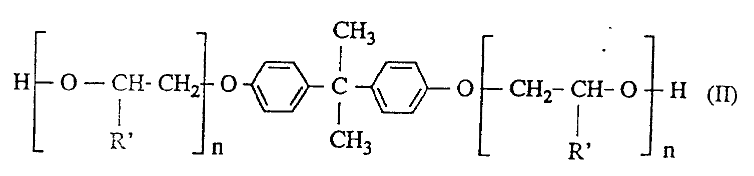 dans laquelle
R' représente l'hydrogène ou un groupe méthyle et
n est en moyenne statistique un nombre entier ou fractionnaire ayant une valeur de 1 à 2,
b2) de 20 à 200 parties en poids d'huile de ricin et
b3) de 0 à 40 parties en poids d'autres composés organiques polyhydroxyliques.

2. Combinaison de liants suivant la revendication 1, caractérisée en ce que les groupes isocyanato du composant a) sont présents au moins en partie sous la forme protégée par l'oxime de butanone.

3. Combinaisons de liants suivant les revendications 1 et 2, caractérisées en ce que le composant polyol b3) éventuellement utilisé présente un indice d'hydroxyle de 50 à 200 et est principalement constitué d'un polyhydroxypolyéther ou d'un polyhydroxypolyester ou d'un polyhydroxypolyacrylate ou d'un mélange de ces composés polyhydroxyliques.

4. Utilisation de la combinaison de liants suivant les revendications 1 à 3 dans des vernis au four à base de polyuréthanne à un seul composant.

5. Procédé de production de revêtements par enduction de substrats quelconques résistants à la chaleur avec une composition de revêtement durcissable sous l'influence de la chaleur, qui contient comme liants des combinaisons entre des polyisocyanates protégés et des composés polyhydroxyliques organiques, puis durcissement du revêtement à une température de 90 à 220°C, caractérisé en ce qu'on utilise comme compositions de revêtement des compositions qui contiennent comme liants des combinaisons de liants suivant les revendications 1 à 3.
